(19) Europäisches Patentamt
European Patent Office
Office européen des brevets

(11) Publication number: **0 275 658 B1**

(12) # EUROPEAN PATENT SPECIFICATION

(45) Date of publication of patent specification: **12.06.91**

(51) Int. Cl.5: **C10M 129/93**, //C10N10:04, C10N30:04

(21) Application number: **87310947.4**

(22) Date of filing: **11.12.87**

(54) **Heavy duty lubricating compositions.**

(30) Priority: **12.12.86 US 941094**

(43) Date of publication of application:
**27.07.88 Bulletin 88/30**

(45) Publication of the grant of the patent:
**12.06.91 Bulletin 91/24**

(84) Designated Contracting States:
**DE GB**

(56) References cited:
**CA-A- 1 170 247**
**US-A- 3 271 310**
**US-A- 3 428 561**

(73) Proprietor: **EXXON CHEMICAL PATENTS INC.**
**1900 East Linden Avenue**
**Linden New Jersey 07036(US)**

(72) Inventor: **Gutierrez, Antonio**
**22 Tar Heels Road**
**Mercerville New Jersey 08619(US)**
Inventor: **Lundberg, Robert Dean**
**4 Brian Drive**
**Bridgewater New Jersey 08807(US)**
Inventor: **Schetelich, Alan Alvin**
**2294 Edgewood Terrace**
**Scotch Plains New Jersey 07076(US)**

(74) Representative: **Northover, Robert Frank et al**
**Exxon Chemical Limited Exxon Chemical**
**Technology Centre PO Box 1**
**Abingdon Oxfordshire, OX13 6BB(GB)**

**EP 0 275 658 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to heavy duty lubricating oil compositions, and to concentrates for such lubricating compositions. The compositions contain as additives various zinc salts of hydrocarbyl substituted mono- or dicarboxylic acids producing reaction products, where the hydrocarbyl group has a number average molecular weight ($M_n$) of greater than 900. The metal salt additives are especially useful as detergents and/or dispersants.

Certain metal salts of alkenyl succinic acids are known. For instance, US-A-3217310 teaches that a "metal salt of hydrocarbon-substituted succinic acid having at leat 50 aliphatic carbon atoms is the hydrocarbon substituent, the metal of the metal salt being selected from the class consisting of Group I metals, Group II metals, aluminum, lead, tin, cobalt and nickel is useful as a dual purpose additive, i.e. as a detergent/rust inhibitor, but describes the use of additional dispersant materials in fully formulated oils.

Similarly, US-A-4552677 discloses a similar material in which the preferred metal in the salt is copper and the hydrocarbon substituent contains from 8 to 35 carbon atoms.

US-A-4234435 discloses that certain of the salts disclosed in US-A-3271310 are useful as dispersant/detergents and viscosity improving agents in lubricating oil compositions. The salts include those in which the polybutene moiety have a $M_n$ of from 1300 to 5,000, a $M_w/M_n$ ratio between 1.5 and 4.0 and in which the ratio of the succinic moiety to the polybutene substituent is at least 1.3.

US-A- 3-714 042 relates to the treatment of basic metal sulfonate complexes, sulfonate-carboxylate complexes and carboxylate complexes with high molecular weight carboxylic acids to prepare additives useful in lubricating oils and gasolines. The patent teaches the ineffectiveness of preformed metal salts of high molecular weight carboxylic acids for such treatments, and exemplifies the sediment formation resulting from use of the calcium salt of polyisobutenyl succinic anhydride at low concentrations in a mineral lubricating oil.

The present invention is directed to a heavy duty lubricating oil composition, comprising a major amount of a lubricating oil base stock, and so far as detergency and dispersancy are concerned, consisting essentially of

a zinc salt of a hydrocarbyl substituted acrylic acid or $C_4$ to $C_{10}$ monounsaturated mono- or dicarboxylic acid producing reaction product, which reaction product is formed by reacting an olefin polymer of $C_2$ to $C_{10}$ monoolefin having a number average molecular weight greater than 900 and acrylic acid or a $C_4$ to $C_{10}$ monounsaturated acid material, said zinc salt being present in a concentration of from 0.1 to 20 wt.; of said lubricating oil composition and

a viscosity modifier.

Lubricating oil compositions, e.g., heavy duty oils suitable for gasoline and diesel engine, etc., can be prepared using the compositions of the invention. Universal type crankcase oils, those in which the same lubricating oil composition is used for either gasoline or diesel engines, may also be prepared. These lubricating oil formulations conventionally contain several different types of additives that will supply the characteristics that are required for the particular use. Among these types of additives are included viscosity index improvers, antioxidants, corrosion inhibitors, detergents, dispersants, pour point depressants and antiwear agents.

In the preparation of lubricating oil formulations, it is common practice to introduce the additives in the form of a concentrate (for instance, as an "ad pack") containing 10 to 80 weight percent, e.g., 20 to 80 weight percent, active ingredient in a solvent. The solvent may be a hydrocarbon oil, e.g., a mineral lubricating oil, or other suitable material. In forming finished lubricants, such as crankcase motor oil, these concentrates, in turn, may be diluted with 3 to 100, preferably 5 to 40, parts by weight of lubricating oil per part by weight of the additive package. One uses concentrates, of course, to make the handling of the various constituent materials less difficult as well as to facilitate solution in or dispersion of those materials in the final blend.

## THE COMPOSITIONS

Compositions made according to the invention will contain a major amount of a lubricating oil base stock, a detergent/dispersant additive consisting essentially of a zinc salt of certain hydrocarbyl substituted mono- or dicarboxylic acid producing reaction products, and preferably a zinc salt of certain high molecular weight alkenyl substituted succinic acids, and a viscosity modifier. Depending upon the use to which the compositions are ultimately placed, the compositions may also include antiwear agents, antioxidants, friction modifiers and pour point depressants.

However, no additional detergent or dispersant is required. Indeed the composition, so far as detergency and dispersancy are concerned, consists essentially of the zinc salt.

The compositions of the invention are used in the form of lubricating oil compositions, such as automotive crankcase lubricating oil compositions, with a major amount of a lubricant may be included in the composition. Broadly, the composition may contain from 85 to 99.99 weight percent of a lubricant, preferably, from 93 to 99.8 weight percent of the lubricant. The term "lubricating oil" is intended to include not only hydrocarbon oils derived from petroleum but also synthetic oils such as alkyl esters of dicarboxylic acids, polyglycols and alcohols, poly-alphaolefins, alkyl benzenes, organic esters of phosphoric acids, polysilicone oils, etc.

Diesel oil lubricating formulations, when containing conventional additives, are typically blended into the base oil in amounts effective to provide their normal attendant functions. Representative and effective amounts of such additives are as follows:

| Additive | Vol. % | Wt.% |
|---|---|---|
| Viscosity Modifier | 1-15 | 1-16 |
| Corrosion Inhibitor | 0.01-1 | 0.01-1.5 |
| Oxidation Inhibitor | 0.01-1 | 0.01-1.5 |
| Dispersant | 0.1-13 | 0.1-14 |
| Pour Point Depressant | 0.01-1 | 0.01-1.5 |
| Anti Foaming Agent | 0.001-0.1 | 0.001-0.1 |
| Antiwear Agent | 0.001-1 | 0.001-1.5 |
| Friction Modifiers | 0.01-1 | 0.01-15 |
| Mineral Oil Base | Balance | Balance |

When the compositions of this invention are provided in the form of concentrates, with or without the other noted additives, a minor amount, e.g., up to about 50 percent by weight, of a solvent, mineral or synthetic oil may be included to enhance the handling properties of the concentrate.

THE DISPERSANT/DETERGENT

The dispersant/detergent in this invention composition are zinc salts of a long chain hydrocarbyl substituted acrylic acid or $C_4$ to $C_{10}$ monounsaturated mono- or dicarboxylic acid producing reaction product, e.g. an acid anhydride, or ester, and the reaction product is formed by reacting an olefin polymer of $C_2$ to $C_{10}$ monoolefin having a number average molecular weight greater than 900 and acrylic acid or a $C_4$ to $C_{10}$ monounsaturated acid material, e.g. itaconic acid, maleic acid, maleic anhydride, chloromaleic acid, dimethyl fumarate, chloromaleic anhydride, methacrylic acid, crotonic acid or cinnamic acid. Preferably the material contains at least 1.05 moles of the acid per mole of polyolefin.

Preferred olefin polymers for the reaction with the unsaturated dicarboxylic acids are those polymers made up of a major molar amount of $C_2$ to $C_{10}$, e.g., $C_2$ to $C_5$, monoolefin. Such olefins include ethylene, propylene, butylene, isobutylene, pentene, octene-1, styrene, etc. The polymers may by homopolymers such as polyisobutylene or copolymers of two or more of such olefins. These include copolymers of: ethylene and propylene; butylene and isobutylene; propylene and isobutylene; etc. Other copolymers include those in which a minor molar amount of the copolymer monomers, e.g., 1 to 10 mole percent is a $C_4$ to $C_{18}$ non-conjugated diolefin, e.g., copolymer of isobutylene and butadiene; or a copolymer of ethylene, propylene and 1,4-hexadiene; etc.

In some cases the olefin polymer may be completely saturated, for example an ethylene-propylene copolymer made by a Ziegler-Natta synthesis using hydrogen as a moderator to control molecular weight.

The olefin polymers have a number average molecular weight above 900, including particularly number average molecular weights within the range of from 900 to 5,000 or 950 to 3,000, with approximately one double bond per polymer chain. An especially suitable starting material for a dispersant additive in polyisobutylene. The number average molecular weight for such polymers can be determined by several known techniques. A convenient method for such determination is by gel permeation chromatography (GPC) which additionally provides molecular weight distribution information, see W.W. Yua, J.J. Kirkland

and D.D. Bly, "Modern Size Exclusion Liquid Chromatography," John Wiley and Sons, New York, 1979.

Processes for reacting the olefin polymer with the $C_4$-$C_{10}$ unsaturated mono- or dicarboxylic acid, anhydride or ester are known in the art. For example, the olefin polymer and the dicarboxylic acid material may be simply heated together as disclosed in US-A-3 361 673 and 3 401 118 to cause the thermal "ene" reaction to take place. Or, the olefin polymer can be first halogenated, for example, chlorinated or brominated to 1 to 8, preferably 3 to 7 weight percent chlorine, or bromine, based on the weight of polymer, by passing the chlorine or bromine through the polyolefin at a temperature of 100° to 250°, e.g., 120° to 160° for 0.5 to 10, preferably 1 to 7 hours. The halogenated polymer may then be reacted with sufficient unsaturated acid or anhydride at 100° to 250°, usually :80° to 220°C for 0.5 to 10, e.g., 3 to 8 hours. Processes of this general type are taught in US-A-3 087 436; 3 172 892; 3 272 746 and others.

Alternatively, the olefin polymer, and the unsaturated acid material are mixed and heated while adding chlorine to the hot material. Processes of this type are disclosed in US-A-3 215 707; 3 231 587: 3 912 764; 4 110 349; 4 234 435; and in GB-A- 1 440 219.

By the use of halogen, 65 to 95 weight percent of the polyolefin will normally react with the dicarboxylic acid material. Thermal reactions, those carried out without the use of halogen or a catalyst, cause only 50 to 75 weight percent of the polyisobutylene to react. Chlorination obviously helps to increase the reactivity.

The salts of the polyalkenyl substituted dicarboxylic acids, anhydrides or esters may then be produced by a reaction with a zinc containing material.

An example of the zinc salts of this invention are Zn salts of polyisobutenyl succinic anhydride (hereinafter referred to as Zn-PIBSA, respectively], and Zn salts of polyisobutenyl succinic acid.

The method used to produce the zinc salt is not believed to be critical to the invention. However, one suitable method of producing the desired salt is via the following procedure: the polyalkenyl substituted dicarboxylic acid, anhydride or ester is first dissolved in a suitable mineral oil solvent. Zinc acetate is introduced into the mineral oil mixture along with a moderate amount of water. The resulting blend may then be heat-soaked at a moderate temperature, e.g., between 95° and 150°C, for a period of time sufficient to complete the reaction. Reaction times vary widely depending upon such things as feedstocks, concentration, etc., but reaction times in the region of one to four hours have been found to be suitable. The product may, if needed or desired, be stripped using an inert gas and filtered.

The zinc salts (e.g., Zn-PIBSA) will be generally employed in amounts of from 0.1 to 20 wt. %, and preferably from 0.2 to 15 wt. % in the final lubricating or fuel composition.

ANTIWEAR ADDITIVES

Dihydrocarbyl dithiophosphate metal salts are frequently added to lubricating oil compositions as antiwear agents. They also provide antioxidant activity. The zinc salts are most commonly used in lubricating oil in amounts of 0.1 to 10, preferably 0.2 to 2 weight percent, based upon the total weight of the lubricating oil composition. They may be prepared in accordance with known techniques by first forming a dithiophosphoric acid, usually by reaction of an alcohol or a phenol with $P_2S_5$ and then neutralizing the dithiophosphoric acid with a suitable zinc compound.

Mixtures of alcohols may be used including mixtures of primary and secondary alcohols, secondary generally for importing improved antiwear properties, with primary giving improved thermal stability properties. Mixtures of the two are particularly useful. In general, any basic or neutral zinc compound could be used but the oxides, hydroxides and carbonates are most generally employed. Commercial additives frequently contain an excess of zinc due to use of an excess of the basic zinc compound in the neutralization reaction.

The zinc dihydrocarbyl dithiophosphates useful in the present invention oil soluble salts of dihydrocarbyl esters of dithiophosphoric acids and may be represented by the following formula:

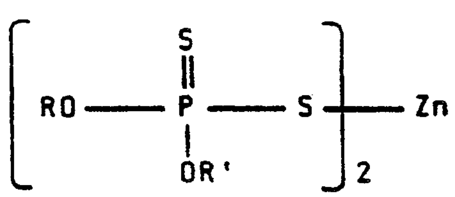

wherein R and R′ may be the same or different hydrocarbyl radicals containing from 1 to 18, preferably 2 to 12 carbon atoms and including radicals such as alkyl, alkenyl, aryl, aralkyl, alkaryl and cycloaliphatic radicals. Particularly preferred as R and R′ groups are alkyl groups of 2 to 8 carbon atoms. Thus, the

radicals may, for example, be ethyl, n-propyl, i-propyl, n-butyl, i-butyl, sec-butyl, amyl, n-hexyl, i-hexyl, n-octyl, decyl, dodecyl, octadecyl, 2-ethylhexyl, phenyl, butyl-phenyl, cyclohexyl, methylcyclopentyl, propenyl, butenyl, etc. In order to obtain oil solubility, the total number of carbon atoms. (i.e., R and R') in the dithiophosphoric acid generally should be about 5 or greater.

## ANTIOXIDANTS

A material which has been used as an antioxidant in lubricating oil compositions containing a zinc dihydrocarbyl dithiophosphate and ashless dispersant is copper, in the form of a synthetic or natural carboxylic acid. Examples include $C_{10}$ to $C_{18}$ fatty acids such as stearic or palmitic acid. But unsaturated acids (such as oleic acid), branched carboxylic acids (such as naphthenic acids) of molecular weight from 200 to 500 and, synthetic carboxylic acids are all used because of the acceptable handling and solubility properties of the resulting copper carboxylates.

Suitable oil soluble dithiocarbamates have the general formula $(RR'\ N\ C\ SS)_nCu$; where n is 1 or 2 and R and R' may be the same or different hydrocarbyl radicals containing from 1 to 18 carbon atoms and including radicals such as alkyl, alkenyl, aryl, aralkyl, alkaryl and cycloaliphatic radicals. Particularly preferred as R and R' groups are alkyl groups of 2 to 8 carbon atoms. Thus, the radicals may, for example, be ethyl, n-propyl, i-propyl, n-butyl, i-butyl, sec-butyl, amyl, n-hexyl, i-hexyl, n-octyl, decyl, dodecyl, octadecyl, 2-ethylhexyl, phenyl, butyl-phenyl, cyclohexyl, methylcyclopentyl, propenyl, butenyl, etc. In order to obtain oil solubility, the total number of carbon atoms (i.e., R and R') generally should be about 5 or greater.

Copper sulfonates, phenates and acetyl acetonates can also be used.

These antioxidants are used in amounts such that, in the final lubricating or fuel composition, a copper concentration of from 5 to 500 ppm is present.

This invention will be further understood by reference to the following examples, wherein all parts are parts by weight, unless otherwise noted. The examples are intended only to exemplify the invention and are not to be considered to limit it in any way.

## EXAMPLES

### Example 1 (Production of Zn-PIBSA)

About 1250 g of a 70% oil solution of a polyisobutenyl succinic anhydride (PIBSA) of Saponification (SAP) Number 69 and derived from a polyisobutylene of average molecular weight of 1300 was dissolved in 2250 g of mineral oil solvent 150 neutral. The oil solution was mixed with 171.4 g of zinc acetate dihydrate, 20 ml of water and heated slowly to 100°C and soaked at this temperature for two hours. The reaction temperature was then raised to 130°C and the oil solution was stripped at 130°C for one hour with a nitrogen gas stream. The product was filtered and collected. The 25% oil solution analyzed for 1.53 wt. % Zn. theory 1.60 wt. % Zn.

### Example 2 (Production of Zn-PIBSA)

About 190 g of a polyisobutenyl succinic anhydride of SAP Number 112 and derived from a polyisobutylene of molecular weight average of 940 was mixed with 532 g S 150 N, 41 g of zinc acetate dihydrate, 5 ml of water and reacted in the same manner as Example 1. The 25% oil solution analyzed for 1.61 wt. % Zn.

### Example 3 (Production of Zn-PIBSA)

About 190 g of a polyisobutenyl succinic anhydride of SAP Number 55 and derived from a polyisobutylene of average molecular weight of 1950 was mixed 395 g of mineral oil solvent 150N. The reaction mixture was combined with 20.7 g of $ZnAc_2 \bullet 2H_2O$, 5 ml of water and heated to 100°C according to the method of Example 1. The 25 wt. % oil solution analyzed for 1.04 wt.% Zn.

### Example 4 (Production of ZN-PIBSA)

About 190 g of a PIBSA of SAP Number 46.5 and derived from a PIB of average molecular weight of 2250 was dissolved in 381.5 g of mineral oil S 150 N. The oil solution was then mixed with 17.4 g of $ZnAc_2$ $2H_2O$. 5 ml of water and slowly heated to 100°C. The reaction was then carried out in the same manner as

in Example 1. The 25% oil solution analyzed for 0.85 wt.% Zn.

Example 5 (Production of Mg-PIBSA)

About 100 g of a 70% oil solution of PIBSA derived from a polyisobutylene of average molecular weight of 1300 was dissolved in 180 g of mineral oil S 150 N and mixed with 13.1 g of magnesium acetate tetrahydrate in 20 ml of water. The reaction mixture was then slowly heated to 100° C. Once the reaction temperature reached 100° C, it was then soaked at this temperature for two hours, heated to 140° C and stripped with a nitrogen stream for one hour. The 25% metal salt solution was filtered and collected. It analyzed for 0.55 wt. % Mg, theoretical 0.60 wt. %.

Example 6 (Production of Ca-PIBSA)

About 120 g of the PIBSA of Example 1 was dissolved in 216 of mineral oils S 150 N and mixed with 12.4 g of $CaAc_2$•1/2 $H_2O$, and 5 ml of water. The reaction mixture was heated slowly to 100° C and soaked at this temperature for two hours. The reaction mixture was heated to 140° C and stripped with a nitrogen stream for one hour. The 25% oil solution was filtered and collected. It analyzed for 0.80% Ca.

Diesel oil lubricating formulations of the invention were prepared from the materials produced in E Example 1 by blending these materials with base stock oil, viscosity modifier, and a pour point depressant. Comparative examples were provided by formulations using the materials of Examples 5 and 6, and by using PIBSA itself and borated PIBSA-PAM. A first set of formulations was a single grade 30W type and the second set was a multigrade 15W/40 type.

These formulations were evaluated in a Panel Coker Test and a Caterpillar 1G2 Engine Test.

The Panel Coker Test is described in the MIL-L-7808C specification and measure the deposit-forming properties of an oil.

The oil is heated to 338° C and sprayed onto a stainless steel panel held at 371° C and then recirculated. The test duration is 60 minutes. The test measures the amount of deposits retained by the panel. The Panel Coker Test is widely recognized as an indication of the performance of a lubricating oil in a diesel engine. In Test Condition 1, a temperature greater than 338° C is used; in Test Condition 2, a temperature of 330° C is used and Test Conditions 3, the temperature is maintained at 338° C. Temperature conditions of 338° C and above are considered important in terms of forecasting performance of an oil in a diesel engine.

PANEL COKER TEST - 30W TYPE

The results of the Panel Coker Test on the single weight oil are as shown in Table 1:

TABLE 1

| Formulation No. | Additive Example No. | Additive Type | % Additive Added | % Active Ingre. Ingre. | Panel Dep.Wt. | Panel App.* |
|---|---|---|---|---|---|---|
| A | -- | Borated-PIBSA-PAM | 5.2% | 2.60 | 26.2 | 10 |
| B | Comparative Ex. 1 Starting Material | PIBSA | 5.2% | 3.07 | 11.6 | 8 |
| C | Comparative Ex. 2 Starting Material | PIBSA | 5.2% | 4.68 | 17.5 | 9 |
| D | Comparative Ex. 1 Starting Material | PIBSA | 3.8% | 2.24 | 18.3 | 6 |
| E | Comparative Ex. 1 Starting Material | PIBSA | 3.8% | 2.24 | 17.7 | 6 |
| F | Comparative Ex. 2 Starting Material | PIBSA | 3.8% | 2.76 | 20.5 | 5 |
| G | Comparative Ex.6 | Ca-PIBSA | 9.8% | 2.45 | 34.1 | 4 |
| H | Comp. Ex.6 | Ca-PIBSA | 9.8% | 2.45 | 29.4 | 4 |
| I | Comp. Ex.6 | Ca-PIBSA | 9.8% | 2.45 | 33.9 | 7 |
| J | Comp. Ex.6 | Ca-PIBSA | 9.8% | 2.45 | 25.2 | 7 |
| K | Example 1 | Zn-PIBSA | 9.8% | 2.45 | 15.6 | 2 |
| L | Example 1 | Zn-PIBSA | 9.8% | 2.45 | 10.6 | 2 |
| M | Example 1 | Zn-PIBSA | 13.5% | 3.37 | 14.0 | 1 |
| N | Comp. Ex.5 | Mg-PIBSA | 9.8% | 2.45 | 30.7 | 3 |

*(1 is best, 10 is worst)

In Table 1, 5.2% of a borated PIBSA-PAM dispersant based on a PIB of Mn=1300 and a SA:PIB ratio of 1.04 was used in formulation A. Formulation B is identical to formulation A except that the borated PIBSA-PAM dispersant was replaced by 5.2 vol % of a PIBSA based on a PIB of $M_n$=1300 and a SA:PIB ratio 1.31. In formulation C, the borated PIBSA-PAM dispersant was replaced by a PIBSA based on a PIB of $M_n$=940 and a SA:PIB ratio of 1.04. In formulations E and F the amount of PIBSA added (3.i vol %) represent equal detergent inhibitor component (D.I.) to 5.2% of the borated dispersant. In formulations G,H,I,J,K,L and N the borated PIBSA-PAM dispersant was replaced by an equivalent amount of D.I. (9.8 vol %) of the Ca, Zn and Mg salts, respectively. Formulation M represents an equivalent amount of D.I. as in formulation C.

The table clearly indicates that formulation K, L, and M give a superior panel appearance rating versus their counterpart PIBSAs or borated dispersants (A,B,C) of Ca-PIBSA and Mg-PIBSA.

Based on the Coker Plate Test data, a lubricating formulation using Zn-PIBSA was prepared. An abbreviated 1G2 test (120 hours) was run on several oils having the same basic formulation but with various types of detergents/dispersants. The results are as follows.

PANEL COKER TEST - 15 W/TYPE

The results of the Panel Coker Test on the multigrade oil are as shown in Table 2:

TABLE 2

| Formulation No. | Example No. | Detergent Additive | % Detergent Added | Panel Dep. Wt. | Panel App. |
|---|---|---|---|---|---|
| O | -- | BASE | 5.2% | 29.3 | 4 |
| P | Comparative Ex. 1 Starting Material | PIBSA | 5.2% | 14.2 | 5 |
| Q | Comparative Ex.6 | Ca-PIBSA | 9.8% | 54.9 | 3 |
| R | Example 1 | Zn-PIBSA | 9.8% | 25.2 | 2 |
| S | Example 1 | Zn-PIBSA | 9.8% | 44.8 | 1 |

The deposits in Table 2 are larger because of the presence of the VI polymer. However, the behaviour shown in Table 1 is again the same. The Zn-PIBSA materials give the cleanest panels.

ENGINE TEST (Caterpillar 1G2)

The 1G2 Engine Test method was designed to relate the detergency characteristics and anti-wear properties of the diesel crankcase lubricating oils. The diesel test engine is operated at a specific RPM, temperature, engine air flow rate, etc., so to result in reproducible valves.

Based on the Coker Plate Test data, a lubricating formulation using Zn-PIBSA, an abbreviated 1G2 test (120 hours) was run on several oils having the same basic formulation but with various types of detergents/dispersants. The results are as follows:

TABLE 3

| Additives Used | 120 Hr. 1G2 Results | |
|---|---|---|
| | TGF | WTD |
| Borated PIBSA-PAM Dispersant #1[(a)] | 57 | 329 |
| Borated PIBSA-PAM Dispersant #1[(a)] | 57 | 324 |
| Borated PIBSA-PAM Dispersant #2[(b)] | 60 | 429 |
| Borated PIBSA-PAM Dispersant #2[(b)] | 66 | 336 |
| Zn-PIBSA | 70 | 263 |

(a) This dispersant is based on a polyisobutylene (PIB) of average molecular weight of 1300 and a succinic anhydride ratio to PIB of 1.31.

(b) The dispersant is based on a polyisobutylene (PIB) of average molecular weight of 940 and a succinic anhydride ratio to PIB of 1.04.

The results in Table 3 clearly showed that Zn-PIBSA had by far the lowest weighed total demerits (WTD) indicating a substantial superiority over the conventional dispersants in this engine test. The WTD value is a direct measure of the overall piston cleanliness. It includes top groove fill (TGF). Furthermore, the rating sheet for the Zn-PIBSA oil which provides a visual picture of piston cleanliness showed the following: Number 3 groove was 98% clean; Number 4 groove was 100% clean. Number 3 land was 60% clean, and Number 4 land was 95% clean.

## Claims

1. A heavy duty lubricating oil composition comprising a major amount of a lubricating oil base stock, and so far as detergency and dispersancy are concerned, consisting essentially of a zinc salt of a hydrocarbyl substituted acrylic acid or $C_4$ to $c_{10}$ monounsaturated mono- or dicarboxylic acid producing reaction product, which reaction product is formed by reacting an olefin polymer of $C_2$ to $C_{10}$ monoolefin having a number average molecular weight greater than 900 and acrylic acid or a $C_4$ to $C_{10}$ monounsaturated acid material, said zinc salt being present in a concentration of from 0.1 to 20 wt.% of said lubricating oil composition and

   a viscosity modifier.

2. The composition of claim 1 wherein the $C_4$ to $C_{10}$ monounsaturated acid material used to prepare the dispersant/detergent additive is maleic anhydride.

3. The composition of claim 1 or claim 2 wherein the olefin polymer used to produce the metal salts is a polybutene.

4. The composition of claim 3 wherein the olefin polymer used to produce the metal salt is polyisobutylene.

5. The composition of any of claims 1 to 4, also containing a friction modifier material.

6. The composition of any of claims 1 to 5, also containing a low molecular weight carboxylate salt.

7. The composition of claim 6 wherein the low molecular weight carboxylate salt is copper oleate.

8. The use of a zinc salt of polyisobutenyl succinic anhydride, wherein the polyisobutene moiety has a number average molecular weight of greater than 900 as the sole dispersant/detergent additives in a heavy duty lubricating oil compositions comprising a viscosity modifier.

## Revendications

1. Composition d'huile lubrifiante pour services sévères, comprenant une quantité dominante d'une huile lubrifiante de base et, dans la mesure où le pouvoir détergent et le pouvoir dispersant sont concernés, consistant essentiellement en un sel de zinc d'un acide acrylique ou acide mono- ou dicarboxylique mono-insaturé en $C_4$ à $C_{10}$, à substitution hydrocarbyle, donnant un produit de réaction, produit de réaction qui est formé en faisant réagir un polymère oléfinique d'une mono-oléfine en $C_2$ à $C_{10}$ ayant une moyenne numérique du poids moléculaire supérieure à 900 et de l'acide acrylique ou un acide mono-insaturé en $C_4$ à $C_{10}$, ledit sel de zinc étant présent en une concentration de 0,1 à 20 % en poids de ladite composition d'huile lubrifiante,
ainsi qu'un modificateur de viscosité.

2. Composition suivant la revendication 1, dans laquelle l'acide mono-insaturé en $C_4$ à $C_{10}$ utilisé pour la préparation de l'additif dispersant/détergent est l'anhydride maléique.

3. Composition suivant la revendication 1 ou la revendication 2, dans laquelle le polymère oléfinique utilisé pour produire les sels métalliques est un polybutène.

4. Composition suivant la revendication 3, dans laquelle le polymère oléfinique utilisé pour produire le sel métallique est un polyisobutylène.

5. Composition suivant l'une quelconque des revendications 1 à 4, contenant également un modificateur de friction.

6. Composition suivant l'une quelconque des revendications 1 à 5, contenant également un carboxylate de bas poids moléculaire.

7. Composition suivant la revendication 6, dans laquelle le carboxylate de bas poids moléculaire est l'oléate de cuivre.

8. Utilisation d'un sel de zinc d'anhydride polyisobuténylsuccinique, dans lequel le groupement polyisobutène possède une moyenne numérique du poids moléculaire supérieure à 900, comme seul additif dispersant/détergent dans une composition d'huile lubrifiante pour services sévères comprenant un modificateur de viscosité.

## Ansprüche

1. Hochleistungsschmierölzusammensetzung, die eine überwiegende Menge einer Schmierölbasis umfaßt, soweit das Reinigungs-und Dispersionsvermögen betroffen sind, im wesentlichen aus einem Zinksalz einer kohlenwasserstoffsubstituierten Acrylsäure oder eines monoungesättigte $C_4$-$C_{10}$ Mono- oder

Dicarbonsäure produzierenden Reaktionsproduktes besteht, wobei das Reaktionsprodukt durch Umsetzen eines Olefinpolymeren aus $C_2$-$C_{10}$ Monoolefin mit einem zahlenmäßigen durchschnittlichen Molekulargewicht von größer als 900 mit Acrylsäure oder einem $C_4$-$C_{10}$ monoungesättigten Säurematerial gebildet ist, wobei das Zinksalz in einer Konzentration von 0,1 bis 20 Gew.% der Schmierölzusammensetzung vorhanden ist, und ein viskositätsmodifizierendes Mittel umfaßt.

**2.** Zusammensetzung nach Anspruch 1, worin das monoungesättigte $C_4$-$C_{10}$ Säurematerial, das zur Herstellung des Dispergier-/Tensidadditivs verwendet wurde, Maleinsäureanhydrid ist.

**3.** Zusammensetzung nach Anspruch 1 oder 2, worin das Olefinpolymer, das zur Herstellung der Metallsalze verwendet wurde, ein Polybuten ist.

**4.** Zusammensetzung nach Anspruch 3, worin das Olefinpolymer, das zur Herstellung der Metallsalze verwendet wurde, Polyisobutylen ist.

**5.** Zusammensetzung nach einem der Ansprüche 1 bis 4, die weiterhin ein reibungsmodifizierendes Material enthält.

**6.** Zusammensetzung nach einem der Ansprüche 1 bis 5, die weiterhin ein niedermolekulargewichtiges Carbonsäuresalz enthält.

**7.** Zusammensetzung nach Anspruch 6, worin das niedermolekulargewichtige Carbonsäuresalz Kupferoleat ist.

**8.** Verwendung eines Zinksalzes des Polyisobutenylbernsteinsäureanhydrids, wobei der Polyisobutenrest ein mittleres zahlenmäßige Molekulargewicht von größer als 900 hat, als einziges Dispergier-/Tensidadditiv in einer Hochleistungsschmierölzusammensetzung, die ein viskositätsmodifizierendes Mittel enthält.